# EUROPÄISCHE PATENTANMELDUNG

(11) **EP 4 001 700 A1**
(43) Veröffentlichungstag der Anmeldung: **25.05.2022**
(21) Anmeldenummer: 20207586.7
(22) Anmeldetag: 13.11.2020
(51) Int. Cl.: F16H 57/02, F16H 57/028, F16H 57/04, F16H 57/031

(54) **GEHÄUSE, HERSTELLUNGSVERFAHREN, VERFAHREN ZUR SIMULATION**

(71) Anmelder: Flender Industriegetriebe GmbH, 09322 Penig (DE)
(72) Erfinder: Hauser, Gerd, 08058 Zwickau (DE)
(74) Vertreter: Michalski Hüttermann & Partner Patentanwälte mbB

(57) **Zusammenfassung**

Die Erfindung betrifft ein Gehäuse (CSG), insbesondere für ein Getriebe (TRM), umfassend Gehäusewände (CSW), die zumindest teilweise als Blechbauteil (SME) aus mindestens einem Blech (SML) (SML) bestehen, wobei das mindestens eine Blech (SML) eine Stärke (WDT) von 5 bis zu 50 mm aufweist. Zur Flexibilisierung der Fertigung wird vorgeschlagen, dass zumindest einige Gehäusewände (CSW) mindestens abschnittsweise als Blechmehrschichtbereiche (SMM) ausgebildet sind, derart, dass diese Bereiche mindestens zwei sich flächig und im Wesentlichen parallel zueinander erstreckende Bleche (SML) aufweisen und wobei mindestens zwei Blechabschnitte (SMS) entlang der im Wesentlichen parallelen Erstreckung zueinander zumindest bereichsweise miteinander verbunden sind. Daneben umfasst die Erfindung auch ein Herstellungsverfahren, ein computerimplementiertes Verfahren zur Simulation einer Anordnung und ein entsprechendes Computerprogrammprodukt zur Durchführung dieses Verfahrens mittels mindestens eines Computers.

## Beschreibung

Die Erfindung betrifft ein Gehäuse, insbesondere für ein Getriebe, umfassend Gehäusewände, die zumindest teilweise als Blechbauteil aus mindestens einem Blech bestehen, wobei das mindestens eine Blech eine Stärke von 5 bis zu 50 mm aufweist.

Daneben umfasst die Erfindung auch ein Herstellungsverfahren, ein computerimplementiertes Verfahren zur Simulation einer Anordnung und ein entsprechendes Computerprogrammprodukt zur Durchführung dieses Verfahrens mittels mindestens eines Computers.

Getriebe, insbesondere Industriegetriebe werden konventionell als Gussgehäuse für mittlere bis große Stückzahl konzipiert. Dementsprechend sind Anbauteile und sonstiges Zubehör ausgelegt. Kleine Stückzahlen oder besondere Anforderungen bedingen mitunter auch schweißtechnisch gefertigte Gehäusevarianten hier sind besondere Aufwendungen notwendig, die benötigte Funktionalität in das Schweißgehäuse zu integrieren.

Eine Anwendungsmöglichkeit für eine gattungsgemäße Anordnung ist in der DE102007020453A1 gezeigt. Dort ist das Getriebegehäuse zweischalig ausgebildet, wobei ein Lager einer Welle des Getriebes teilweise an einer ersten Gehäuseschale und teilweise an einer zweiten Getriebeschale befestigt ist, wobei das Rohrsystem nur an der ersten Gehäuseschale befestigt ist, und die Kammer in einer Ausnehmung in der ersten Gehäuseschale ausgebildet ist. Die zweite Gehäuseschale kann zur Montage oder Wartung abgenommen werden, wobei das Rohrsystem beim Abnehmen nicht beeinträchtigt wird. Somit ist die Fertigung eines Getriebes vereinfacht. gezeigt.

Ausgehend von den zuvor beschriebenen Problemen liegt der Erfindung die Aufgabe zugrunde, das Gehäuse derart zu gestalten, dass die Fertigung flexibler gestaltet werden kann.

Zur Lösung der Aufgabe schlägt die Erfindung ein Gehäuse der eingangs definierten Art vor, bei der zumindest einige Gehäusewände mindestens abschnittsweise als Blechmehrschichtbereiche ausgebildet sind, derart, dass diese Bereiche mindestens zwei sich flächig und im Wesentlichen parallel zueinander erstreckende Bleche aufweisen und wobei mindestens zwei Blechabschnitte entlang der im Wesentlichen parallelen Erstreckung zueinander zumindest bereichsweise miteinander verbunden sind.

Die aus dem Stand der Technik bekannte zweischalig Bauweise von Gehäusen sieht nicht vor, dass eine Schicht bzw. Schale die andere mechanisch derart unterstützt, dass diese Unterstützung bei der Auslegung der jeweiligen Gehäuseschale berücksichtigt werden kann. Vielmehr ist die zweite, äußere Schale eher eine Verkleidung für zwischen den Schalen angeordneten Funktionseinheiten. Nach der Erfindung tritt der besondere Vorteil ein, dass in den Blechmehrschichtbereichen die Verbindung zwischen den Blechabschnitten derart ausgebildet ist, dass beide Blechabschnitte jeweils einen Beitrag zur mechanischen Stabilität der Gehäusewand leisten oder, in anderen Worten, die verbundenen Bleche jeweils einen vollständig zu berücksichtigenden Beitrag bei der Festigkeitsanalyse leisten. Mit anderen Worten: die Verbindung zwischen den Blechabschnitten in den Blechmehrschichtbereichen ist derart ausgebildet, dass die verbundenen Blechabschnitte die mechanische Belastung gemeinsam aufnehmen.

Eine vorteilhafte Weiterbildung sieht vor, dass das mindestens eine Blech an einer Biegekante eine Biegung um mindestens 30° besonders bevorzugt mindestens 70° aufweist. Ein weiterer Vorteil der Erfindung liegt darin, dass die einzelnen Bleche in den Blechmehrschichtbereichen, insbesondere vor der Verbindung miteinander, gebogen werden können und auf diese Weise andere formgebende Verfahren - die aufwendiger sind (zum Beispiel das Verschweißen von zwei im Winkel aneinander stoßender Blechkanten) - eingespart werden können.

Eine vorteilhafte Weiterbildung sieht vor, dass die Verbindung der bereichsweise miteinander verbundenen Blechabschnitte als stoffschlüssige Verbindung ausgebildet ist. Als Möglichkeiten der Verbindung sind hier insbesondere eine Schweißverbindung, eine Lötung oder eine Klebung vorteilhaft.

Durch den schichtweisen Aufbau ist auch eine Geräuschoptimierung möglich, da große Flächen, die durch eigenfrequente Anregung zu einer deutlichen Geräuschentwicklung neigen, durch Aussparungen in einzelnen Schichten und partielle Durchschweißungen sowie Aufschweißungen in kleinere Anregungssegmente unterteilt werden können und auf diese Weise Eigenspannung lokal erhöht werden können. Daraus folgt eine Dämpfung und Verschiebung der relevanten Frequenzbereiche, so dass eine Geräuschreduzierung bewirkt wird. Die Wirkung der Aussparungen und Durchschweißungen können im Vorfeld mittels FEM berechnet bzw. überprüft werden.

Eine vorteilhafte Weiterbildung sieht vor, dass die mindestens zwei sich flächig parallel zueinander erstreckenden Blechabschnitte im Bereich der Verbindung miteinander in direktem Kontakt stehen. Alternativ kann ein Zwischenelement vorgesehen sein, dass die beiden Blechabschnitte mechanisch aneinander koppelt. Mittels einer derartigen Kopplung kann nicht nur das Abfangen statischer mechanischer Lasten bewirkt werden, sondern auch eine Abstimmung des Schwingungsverhaltens. Unter einen direkten Kontakt wird auch eine stoffschlüssige Verbindung verstanden.

Eine vorteilhafte Weiterbildung sieht vor, dass mindestens eine Gehäusewand einen Blechmehrschichtbereich aufweist der höchstens zwei, bevorzugt höchstens drei, weiterhin bevorzugt höchstens vier sich flächig und im Wesentlichen parallel zueinander erstreckende Bleche aufweist. Eine derartige Anordnung ist eher für die weniger hochbelasteten Bereiche geeignet.

Eine vorteilhafte Weiterbildung sieht vor, dass mindestens eine Gehäusewand einen Blechmehrschichtbereich aufweist der mindestens drei, bevorzugt mindestens vier, weiterhin bevorzugt mindestens fünf sich flächig und im Wesentlichen parallel zueinander erstreckende Bleche aufweist. Eine derart höhere Anzahl an Schichten ermöglicht eine hohe Belastung ohne Massivbauweise.

Eine vorteilhafte Weiterbildung sieht vor, dass in den verschiedenen Blechmehrschichtbereichen eines Gehäuses zwischen der minimalen Anzahl und der maximalen Anzahl an sich parallel zueinander erstreckender Bleche eine Differenz von mindestens zwei, bevorzugt mindestens drei, bevorzugt mindestens vier vorliegt. Diese Gestaltungsoptionen spiegeln die Flexibilität der erfindungsgemäßen Gehäuse wider, wobei eine zunehmende Anzahl an Schichten die Handhabung der einzelnen Bleche vereinfacht, weil zur Aufweichung der gleichen mechanischen Integrität Blechklassen mit niedrigeren Blechstärken verwendet werden können. Gleichzeitig zeigt eine höhere Differenz in den Blechmehrschichtbereichen eines Gehäuses hinsichtlich der Anzahl der verwendeten Bleche, dass die Auslegung erfindungsgemäß besonders an die Belastungen im Betrieb lokal angepasst ist.

Eine vorteilhafte Weiterbildung sieht vor, dass zumindest einige Gehäusewände mindestens abschnittsweise mindestens zwei sich flächig und im Wesentlichen parallel zueinander erstreckende Bleche aufweisen, die zwischen sich mindestens einen Hohlraum ausbilden. Die Erfindung ermöglicht die Nutzung des mehrschichtigen Aufbaus der Gehäusewände zur Erstellung von Hohlräumen, in denen Funktionseinheiten des Gehäuses angeordnet werden können. Die Hohlraumausbildung kann besonders vorteilhaft an mindestens dreilagigen Blechsystemen erzeugt werden.

Eine vorteilhafte Weiterbildung sieht vor, dass zumindest ein Hohlraum mit einem Füllstoff befüllt ist. Daneben können Hohlräume vorgesehen werden, dass Schwingungsverhalten der Gehäuse auf den jeweiligen Anwendungsfall abzustimmen. Beispielsweise können Hohlräume mit Rieselgut, beispielsweise Sand oder mit Schäumen oder anderen geeigneten Substanzen befüllt werden, um das Schwingungsverhalten des Gehäuses zu verändern.

Eine vorteilhafte Weiterbildung sieht vor, dass zumindest ein Hohlraum mit einem Füllstoff befüllt ist, der die umgebenden Bleche mittels Flächenkraft verformt. Die Füllstoffe können unter Druck in die Hohlräume eingepresst werden, sodass sich eine elastische und/oder plastische Verformung der angrenzenden Bleche ergibt und sich auf diese Weise das Schwingungsverhalten in einer gewünschten Art und Weise verändern lässt.

Eine vorteilhafte Weiterbildung sieht vor, dass in dem Hohlraum mindestens ein integrierter Kanal zur Führung eines Stroms einer Betriebsflüssigkeit des Getriebes vorgesehen ist.

Das Gehäuse kann vorteilhaft ungeteilt ausgebildet sein, derart, dass eine Zugangsöffnung zu dem Gehäuseinnerem mit einem Deckel des Gehäuses verschlossen ist. Der Deckel kann eine im Wesentlichen ebene Erstreckung aufweisen. Ungeteilt bedeutet hierbei, dass der Deckel keine nennenswerte dreidimensionale Gestalt aufweist oder, in anderen Worten, dass das Gehäuse in seiner Wesentlichen Gestalt ungeteilt ausgebildet ist.

Eine vorteilhafte Weiterbildung sieht vor, dass das Gehäuse eine Teilfuge aufweist, die das Gehäuse in ein erstes Teilgehäuse und ein zweites Teilgehäuse aufteilt, wobei die Teilgehäuse in der Teilfuge lösbar aneinander befestigbar ausgebildet sind. Diese an sich bekannte Konstruktion ermöglicht es, auf herkömmliche Art und Weise hergestellte Teilgehäuse mit erfindungsgemäßen Teilgehäusen zu einem gemeinsamen Gehäuse zu verbinden. Eine denkbare Ausbildung dieser Art ist gegeben dadurch, dass das erste Teilgehäuse als ein massives Schweißbauteil oder massives Gussbauteil ausgebildet ist und das zweite Teilgehäuse als das Blechbauteil ausgebildet ist. Hierbei kann es zweckmäßig sein, wenn dass das erste Teilgehäuse in einer Betriebsaufstellung ein Gehäuseunterteil ist und das zweite Teilgehäuse ein Gehäuseoberteil ist.

Eine vorteilhafte Weiterbildung sieht vor, dass zumindest einige Bleche mittels mindestens einer Auftragsschweißung verstärkt sind. Eine andere Möglichkeit der Versteifung sieht vor, dass zumindest eine Gehäusewand mindestens eine Versteifungsrippe aufweist. Diese Versteifung bekannt mittels einer stoffschlüssigen Verbindung, zum Beispiel mittels einer Schweißung an der Gehäusewand angebracht sein. Besonders zweckmäßig ist hierbei eine Versteifung zum Beispiel in der Art einer Rippe die mittels eines Additives Verfahrens, zum Beispiel mittels einer Auftragsschweißung erzeugt wird.

Eine vorteilhafte Weiterbildung sieht vor, dass in dem Gehäuse die Anordnung von mehreren Rädern, die miteinander in Wirkverbindung stehen, vorgesehen ist, wobei die Räder mit drehbaren Wellen gekoppelt sind, die in Lagerstellen lagern.

Eine vorteilhafte Weiterbildung sieht vor, dass mindestens eine Welle einen Nenndurchmesser von mindestens 95mm aufweist.

Eine vorteilhafte Weiterbildung sieht vor, dass die Lagerstellen mit Lagerelementen belegbar sind, wobei das Lagerelement Anschlusselemente zur Befestigung an dem Gehäuse und mindestens ein Lager zur Aufnahme einer Welle eines Rades aufweist.

Eine vorteilhafte Weiterbildung sieht vor, dass zumindest eine Gehäusewand mindestens abschnittsweise mindestens vier sich flächig und im Wesentlichen parallel zueinander erstreckende Bleche aufweist, wobei mindestens ein Blechabschnitt von jedem Blech entlang der im Wesentlichen parallelen Erstreckung zueinander zumindest bereichsweise mit einem Blechabschnitt von einem anderen der sich im Wesentlichen parallel zueinander erstreckenden Bleche verbunden ist, derart, dass alle der mindestens vier parallelen Bleche zu einem Blechmehrschichtbereiche miteinander verbunden sind.

Die Erfindung betrifft auch ein Verfahren zur Erzeugung eines Gehäuses nach der Erfindung, umfassend:
- Ermittlung einer Geometrie eines umbauten Raumes mit Anschlussgeometrien des Gehäuses,
- Ermittlung einer Auslegungsbelastung des Gehäuses,
- Festlegen von Geometrien von Hohlräumen in den Gehäusewänden,
- Festlegen von unterschiedlichen Blechklassen mit jeweils einer individuellen Blechstärke von 5 bis zu 50 mm,
- Festlegen der
   - Lagenanzahl der Bleche,
   - Blechklasse jeder einzelnen Lage,
   - Art der Verbindung und der Verbindungsbereiche zwischen den Blechen,
   - Anordnung von Biegekanten und Anschlusskanten von Gehäusewänden,
   für die Kombination aus:
   - der Geometrie des umbauten Raumes mit Anschlussgeometrien,
   - die Auslegungsbelastung,
   - die Geometrien der Hohlräume,
- Ausschneiden der Bleche,
- Biegen der Bleche,
- Mindestens bereichsweises Verbinden von zwei sich flächig und im Wesentlichen parallel zueinander erstreckender Bleche zu Blechmehrschichtbereichen und Verbinden von aneinander anstoßender Gehäusewänden,
wobei mindestens zwei Blechabschnitte entlang der im Wesentlichen parallelen Erstreckung zueinander zumindest bereichsweise miteinander verbunden sind zu Blechmehrschichtbereichen zu zumindest einem Teilgehäuse oder Gehäuse,
Wiederholung vorangegangener Schritte bis zur Erstellung aller Elemente des Gehäuses, die Blechmehrschichtbereiche aufweisen.

Eine vorteilhafte Weiterbildung dieses Verfahrens sieht vor, dass Bleche und/oder Blechmehrschichtbereiche mit einer Markierung gekennzeichnet werden, insbesondere einem 2D-Code, z.B. einem Data-Matrix-Code [DMC], der eine eindeutige Identifizierung im Fertigungsprozess und ggf. darüber hinaus ermöglicht. Das Verfahren kann vorsehen, dass der 2D-Code mittels eines optischen Lesegeräts, wie einem Kamera-Scanner, maschinell gelesen und elektronisch weiterverarbeitet wird. Die Blechmehrschichtbereiche bzw. Multilayerbauweise ermöglicht damit eine deutlich weitreichendere Digitalisierung und damit auch eine Vereinheitlichung des Produktionsprozesses für schweißtechnische Produkte (Stichwort Digitaler Zwilling). So erlaubt eine Weiterbildung der Erfindung durch das Aufteilen der Gehäusewände in Schichten die Produktion mit Einheitsblechdicken bzw. Blechklassen im Dünnblechbereich und damit die Nutzung von CNC gesteuerten Brennschneidanlagen (Zum Beispiel Laser- und Plasmaschneidanlagen) mit zusätzlichen Bearbeitungseinheiten zum Anfasen, Bohren und Gewindeschneiden sowie zum Markieren der Bauteile mit den automatisiert lesbaren Beschriftungen. Diese Weiterbildungen ermöglichen die eindeutige Zuordnung eines Bauteils zu eine größeren Baugruppe über Verknüpfungen zu einer Stückliste und den folgenden Fertigungsprozessen sowie die Zugehörigkeit zu einem Fertigungslos oder Batch und damit die Rückverfolgbarkeit zu einer Materialcharge und dem hierfür hinterlegten Werkszeugnis (z.B. einheitliche Legierungszusammensetzung gewährleistet einen zuverlässigeren Schweißprozess). Im Verbund mit einem Automatisierten Schweißprozess mit der Option des selbsttätigen Teilehandlings (Produktionsline im weitesten Sinne) kann vorteilhaft hierdurch die vollautomatische Produktion von Unterbaugruppen bis hin zur Fertigbaugruppe geschaffen werden.

Das bevorzugte Einsatzgebiet der Erfindung liegt im Bereich von Getrieben, insbesondere Industriegetrieben, insbesondere ausgelegt zur Umformung einer Leistung von mindestens 10-50kW (insbesondere für Bandgetriebe), besonders bevorzugt zur Umformung einer Leistung von mindestens 100kW, wie sie beispielsweise an Windkraftanlagen, Mühlen, z.B. Zuckermühlen vorgesehen sind. Diese Getriebe sind bevorzugt als Planetengetriebe ausgebildet. Dementsprechend bezieht sich die Erfindung auch auf eine Windkraftanlagen, Mühlen mit einem erfindungsgemäßen Getriebe bzw. Planetengetriebe.

Die Erfindung bezieht sich auch auf ein computerimplementiertes Verfahren eines Gehäuses oder eines Verfahrens nach mindestens einer durch die Ansprüche definierte Merkmalskombination. Dementsprechend umfasst die Erfindung einerseits das körperliche Gebilde mit den erfindungsgemäßen Merkmalen und andererseits auch einen digitalen Zwilling, wie er beispielsweise zum Zwecke der Simulation der Anordnung bzw. des Betriebes der Anordnung mittels mindestens eines Computers eingesetzt wird. Daneben bezieht sich die Erfindung auch auf ein entsprechendes Computerprogrammprodukt.

Ein derartiges Verfahren ermöglicht die Integration einer erfindungsgemäßen Anordnung in eine bereits bestehende Anlage in vereinfachter Weise, indem zunächst geprüft wird im Wege der computergestützten Simulation, ob eine entsprechende Kompatibilität vorliegt und die gewünschten Effekte tatsächlich eintreten. Entsprechende Vorteile treten auch bei der Planung von Neuanlagen ein.

Vorteile und Ausgestaltungen der Erfindung, die einzeln oder in Kombination miteinander einsetzbar sind, sind Gegenstand der Unteransprüche.

Weitere Merkmale, Eigenschaften und Vorteile der vorliegenden Erfindung ergeben sich aus der nachfolgenden Beschreibung unter Bezugnahme auf die Figuren. Darin zeigen schematisch:
- Figur 1: eine vereinfachte, dreidimensionale ... Getriebe ...
- Figur 2: eine schematische Darstellung einer auf einem Computer ablaufenden Simulation einer Anordnung nach der Erfindung, Computerprogrammprodukt.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

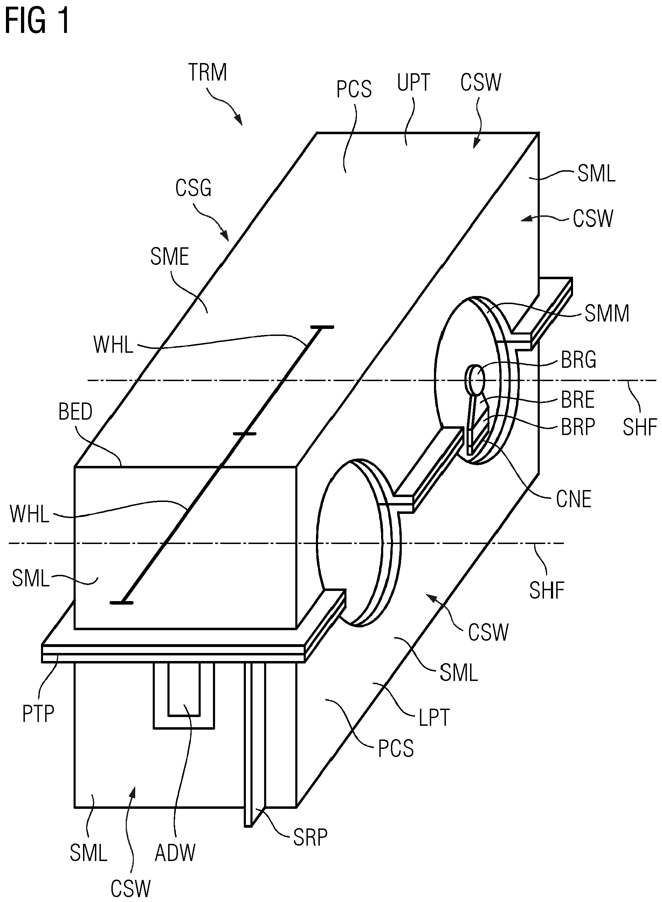

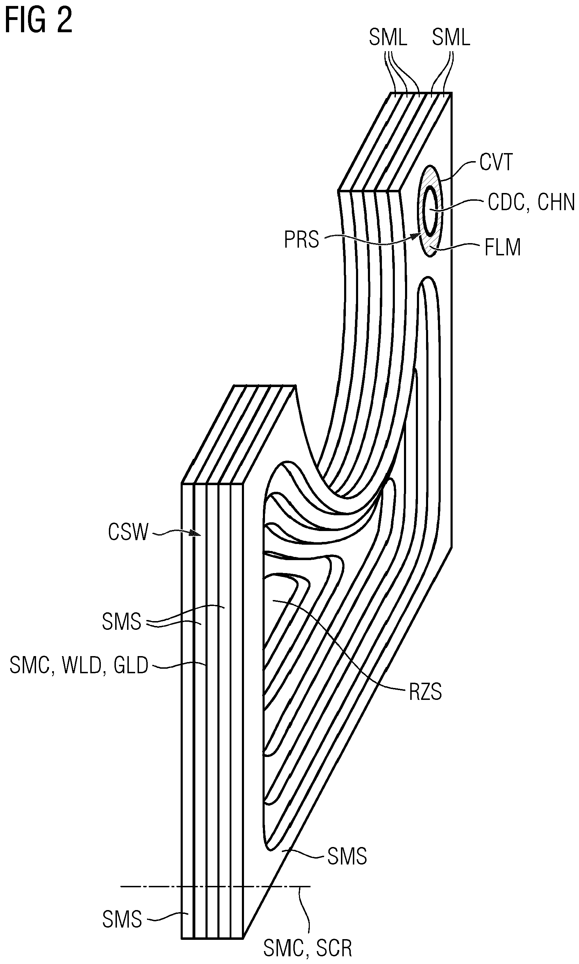

Figur 1 zeigt eine vereinfachte, dreidimensionale Darstellung eines Gehäuses CSG für ein Getriebe TRM in einer erfindungsgemäßen Bauweise. Das Gehäuse CSG weist Gehäusewände CSW auf, die mindestens abschnittsweise als Blechmehrschichtbereiche SMM ausgebildet sind. Eine Gehäusewand CSW, die als Blechmehrschichtbereich SMM ausgebildet ist, zeigt Figur 2 dreidimensional schematisch. Die Blechmehrschichtbereiche SMM weisen mindestens zwei sich flächig und im Wesentlichen parallel zueinander erstreckende Bleche SML auf. Die Blechmehrschichtbereiche SMM weisen mindestens zwei Blechabschnitte SMS entlang der im Wesentlichen parallelen Erstreckung zueinander auf, die zumindest bereichsweise miteinander verbunden sind.

Eine vorteilhafte Weiterbildung sieht vor, dass das mindestens eine Blech SML an einer Biegekante BED eine Biegung um mindestens 70° aufweist.

Eine vorteilhafte Weiterbildung sieht vor, dass die mindestens zwei sich flächig und im Wesentlichen parallel zueinander erstreckenden Bleche SML bereichsweise mittels einer Verbindung SMC aneinander befestigt sind. Figur 2 zeigt beispielhaft die Verbindung SMC als stoffschlüssige Verbindung SMC in der Art einer Schweißung WLD oder Klebung GLD oder als eine Verschraubung SCR. Besonders zweckmäßig stehen die mindestens zwei sich flächig parallel zueinander erstreckenden Blechabschnitte SMS im Bereich der Verbindung SMC miteinander in direktem Kontakt stehen. Im Falle der Verbindung SMC mittels Schrauben SCR sind die jeweils äußeren Blechabschnitte SMS nur mittelbar bzw. indirekt miteinander verbunden, weil - wie in Figur 2 dargestellt - mehrere Bleche SML dazwischen angeordnet sind. Schematisch ist die in Figur 1 dargestellte Gehäusewand CSW mit einem Hohlraum CVT versehen, in dem eine Leitung CDC bzw. ein integrierter Kanal CHN für ein Betriebsmittel des Getriebes TRM angeordnet ist. Im Übrigen ist der Hohlraum CVT mit einem Füllstoff FLM befüllt, der das Schwingungsverhalten verändert. Der Füllstoff FLM kann hierbei ein Rieselgut sein oder ein Schaum oder ein sonstiger Füllstoff und kann gegebenenfalls einen erhöhten Innendruck in dem Hohlraum CVD erzeugen, sodass sich das Schwingungsverhalten der Gehäusewand CSW aufgrund der Füllung infolge der Flächenkraft PRS und/oder aufgrund eines Dämpfungsverhaltens des Füllstoffs FLM ändert.

Der Blechmehrschichtbereich SMM der in Figur 2 dargestellt ist, weist eine Ausnehmung RZS auf, die dadurch entsteht, dass die einzelnen Bleche SML jeweils geometrisch aufeinander abgestimmte Ausnehmungen RZS aufweisen. Auf diese Weise entstehen Bereiche, in denen höchstens zwei sich flächig und im Wesentlichen parallel zueinander erstreckende Bleche SML vorgesehen sind, die das Gehäuse nach außen hin verschließen und andere Bereiche, in denen mindestens drei sich flächig und im Wesentlichen parallel zueinander erstreckende Bleche SML aufweist. In der Figur 2 ist die Ausnehmung RZS keine durchgängige Öffnung des Blechmehrschichtbereich SMM sondern eine Wandstärkenverringerung.

Das in der Figur 1 dargestellte Gehäuse CSG bzw. Getriebe TRM, weist eine Teilfuge PTP auf, die das Gehäuse CSG in ein erstes Teilgehäuse PCS und ein zweites Teilgehäuse PCS aufteilt, wobei die Teilgehäuse PCS in der Teilfuge PTP lösbar aneinander befestigbar ausgebildet sind. Das Gehäuse kann alternativ auch ungeteilt ausgebildet sein, derart, dass eine Zugangsöffnung zu dem Gehäuseinnerem mit einem Deckel des Gehäuses verschlossen ist. Diese Gestaltung ist nicht gesondert dargestellt, wobei das im Wesentlichen der Darstellung des geschlossenen geteilten Gehäuses mit Teilfuge entspricht bei Fortlassung der Teilfuge, so dass auf eine gesonderte Darstellung verzichtet wird.

Wie in der Figur 1 dargestellt, kann das erste Teilgehäuse PCS in einer Betriebsaufstellung ein Gehäuseunterteil LPT sein und das zweite Teilgehäuse PCS ein Gehäuseoberteil UPT sein. Hierbei kann das erste Teilgehäuse PCS als ein massives Schweißbauteil oder massives Gussbauteil ausgebildet sein und das zweite Teilgehäuse PCS als das Blechbauteil SME ausgebildet sein. Grundsätzlich ist die Ausführung mit einer Teilfuge optional, das Gehäuse kann auch als Monoblock - vorzugsweise mit einer Öffnung versehen - ausgebildet sein (die Variante ohne Teilfuge entspricht der Darstellung nur mit fortgelassener Teilfuge). Die Darstellung der Figur 1 ist hierbei auch dahingehend als optional derart zu verstehen, dass sowohl Gehäuseoberteil UPT als auch Gehäuseunterteil LPT jeweils als Gussbauteil oder Schweißbauteil oder Blechbauteil SME ausgebildet sein können. Erfindungsgemäß ist mindestens ein Teilgehäuse PCE als Blechbauteil SME ausgebildet.
Die beispielhafte Darstellung in der Figur 1 zeigt, dass die Gehäuse CSG bzw. Gehäusewände CSW nach der Erfindung mittels einer Auftragsschweißung ADW oder mittels mindestens einer Versteifungsrippe SRP verstärkt sein können.

In dem Gehäuse CSG kann die Anordnung von mehreren Rädern WHL, die miteinander in Wirkverbindung stehen, vorgesehen sein, wobei die Räder WHL mit drehbaren Wellen SHF gekoppelt sind, die in Lagerstellen BRP lagern.

Eine vorteilhafte Weiterbildung sieht vor, dass mindestens eine Welle SHF einen Nenndurchmesser von mindestens 95mm aufweist.

In Figur 1 nur schematisch angedeutet ist die bevorzugte Möglichkeit, dass die Lagerstellen BRP mit Lagerelementen BRE belegbar sind, wobei das Lagerelement BRE Anschlusselemente CNE zur Befestigung an dem Gehäuse CSG und mindestens ein Lager BRG zur Aufnahme einer Welle SHF eines Rades WHL aufweist.

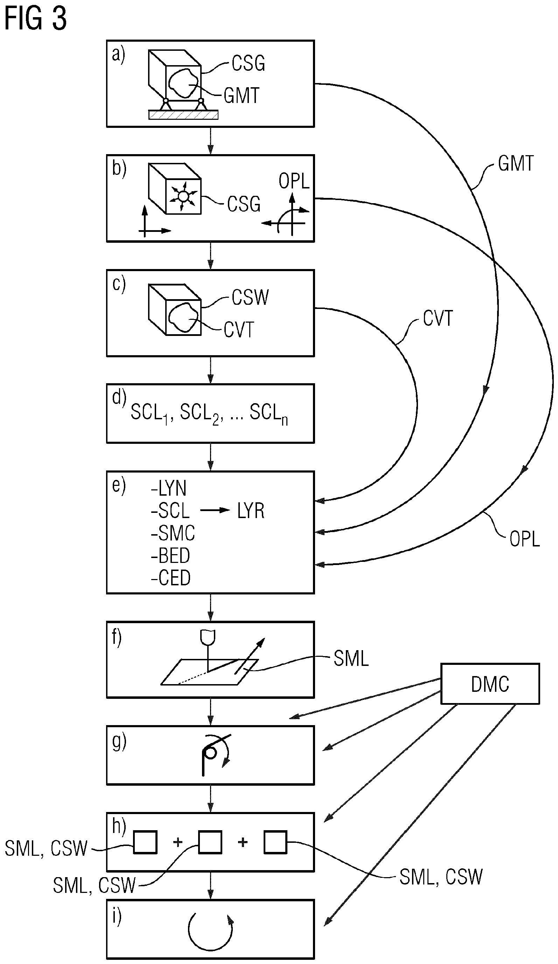

Figur 3 zeigt schematisch ein Verfahren zur Erzeugung eines Gehäuses CSG nach der Erfindung, umfassend folgende Schritte:
a.) Ermittlung einer Geometrie eines umbauten Raumes mit Anschlussgeometrien des Gehäuses CSG,
b.) Ermittlung einer Auslegungsbelastung OPL des Gehäuses CSG,
c.) Festlegen von Geometrien von Hohlräumen CVT in den Gehäusewänden CSW,
d.) Festlegen von unterschiedlichen Blechklassen SCL mit jeweils einer individuellen Blechstärke von 5 bis zu 50 mm,
e.) Festlegen der
   - Lagenanzahl LYN der Bleche SML,
   - Blechklasse SCL jeder einzelnen Lage LYR,
   - Art der Verbindung SMC und der Verbindungsbereiche zwischen den Blechen SML,
   - Anordnung von Biegekanten BED und Anschlusskanten CED von Gehäusewänden CSW,
   für die Kombination aus:
   - der Geometrie GMT des umbauten Raumes mit Anschlussgeometrien,
   - die Auslegungsbelastung OPL,
   - die Geometrien der Hohlräume CVT,
f.) Ausschneiden der Bleche SML,
g.) Biegen der Bleche SML,
h.) Mindestens bereichsweises Verbinden von zwei sich flächig und im Wesentlichen parallel zueinander erstreckender Bleche SML zu Blechmehrschichtbereichen SMM und Verbinden von aneinander anstoßender Gehäusewänden CSW,
   wobei mindestens zwei Blechabschnitte entlang der im Wesentlichen parallelen Erstreckung zueinander zumindest bereichsweise miteinander verbunden sind zu Blechmehrschichtbereichen SMM zu zumindest einem Teilgehäuse PCS oder Gehäuse CSG,
i.) Wiederholung vorangegangener Schritte bis zur Erstellung aller Elemente des Gehäuses CSG, die Blechmehrschichtbereiche SMM aufweisen.

Eine vorteilhafte Weiterbildung dieses Verfahrens sieht vor, dass Bleche SML und/oder Blechmehrschichtbereiche SMM mit einer Markierung gekennzeichnet werden, insbesondere einem 2D-Code, z.B. einem Data-Matrix-Code [DMC], der eine eindeutige Identifizierung im Fertigungsprozess und ggf. darüber hinaus ermöglicht. Das Verfahren kann vorsehen, dass der 2D-Code mittels eines optischen Lesegeräts, wie einem Kamera-Scanner, maschinell gelesen und elektronisch weiterverarbeitet wird.

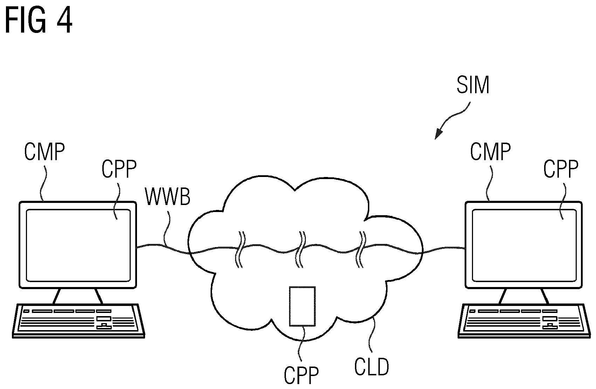

Figur 4 zeigt eine schematische Darstellung einer auf einem Computer CMP - hier auf mehreren Computern CMP eines Netzwerks WWB umfassend eine Cloud CLD - ablaufenden Simulation SIM einer Anordnung ARG nach der Erfindung. Die auf den Computern CMP installierte Software ist ein Computerprogrammprodukt CPP, das bei Ausführung auf mindestens einem Computer CMP dem Benutzer mittels Schnittstellen Bildschirm, Tastatur eine Einflussnahme bzw. Konfiguration und einen Erkenntnisgewinn auf Basis der ausgeführten Simulation SIM ermöglicht, so dass insbesondere technische Gestaltungsentscheidungen mittels der Simulation unterstützt und verifiziert werden können.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Gehäuse (CSG), insbesondere für ein Getriebe (TRM), umfassend Gehäusewände (CSW), die zumindest teilweise als Blechbauteil (SME) aus mindestens einem Blech (SML) bestehen, wobei das mindestens eine Blech (SML) eine Stärke (WDT) von 5 bis zu 50 mm aufweist,
**dadurch gekennzeichnet, dass**
zumindest einige Gehäusewände (CSW) mindestens abschnittsweise als Blechmehrschichtbereiche (SMM) ausgebildet sind, derart, dass diese Bereiche mindestens zwei sich flächig und im Wesentlichen parallel zueinander erstreckende Bleche (SML) aufweisen und wobei mindestens zwei Blechabschnitte (SMS) entlang der im Wesentlichen parallelen Erstreckung zueinander zumindest bereichsweise miteinander verbunden sind.

2. Gehäuse (CSG) nach Anspruch 1, wobei das mindestens eine Blech (SML) an einer Biegekante (BED) eine Biegung um mindestens 15° aufweist.

3. Gehäuse (CSG) nach Anspruch 1 oder 2, wobei die Verbindung (SMC) der bereichsweise miteinander verbundenen Blechabschnitte (SMS) als stoffschlüssige Verbindung (SMC) ausgebildet ist.

4. Gehäuse (CSG) nach mindestens dem vorhergehenden Anspruch 3, wobei die mindestens zwei sich flächig und im Wesentlichen parallel zueinander erstreckenden Bleche (SML) bereichsweise mittels einer geklebten Verbindung (SMC) aneinander befestigt sind.

5. Gehäuse (CSG) nach mindestens einem der vorhergehenden Ansprüche 3 oder 4, wobei die mindestens zwei sich flächig parallel zueinander erstreckenden Blechabschnitte (SMS) im Bereich der Verbindung (SMC) miteinander in direktem Kontakt stehen.

6. Gehäuse (CSG) nach mindestens einem der vorhergehenden Ansprüche, wobei mindestens eine Gehäusewand (CSW) einen Blechmehrschichtbereich (SMM) aufweist der höchstens zwei sich flächig und im Wesentlichen parallel zueinander erstreckende Bleche (SML) aufweist.

7. Gehäuse (CSG) nach mindestens einem der vorhergehenden Ansprüche, wobei mindestens eine Gehäusewand (CSW) einen Blechmehrschichtbereich (SMM) aufweist der mindestens drei sich flächig und im Wesentlichen parallel zueinander erstreckende Bleche (SML) aufweist.

8. Gehäuse (CSG) nach mindestens einem der vorhergehenden Ansprüche, wobei zumindest einige Gehäusewände (CSW) mindestens abschnittsweise mindestens zwei sich flächig und im Wesentlichen parallel zueinander erstreckende Bleche (SML) aufweisen, die zwischen sich mindestens einen Hohlraum (CVT) ausbilden.

9. Gehäuse (CSG) nach mindestens dem vorhergehenden Anspruch, wobei zumindest ein Hohlraum (CVT) mit einem Füllstoff (FLM) befüllt ist.

10. Gehäuse (CSG) nach mindestens dem vorhergehenden Anspruch, wobei zumindest ein Hohlraum (CVT) mit einem Füllstoff (FLM) befüllt ist, der die umgebenden Bleche (SML) mittels Flächenkraft (PRS) verformt.

11. Gehäuse (CSG) nach mindestens einem der vorhergehenden Ansprüche 8 bis 10, wobei in dem Hohlraum (CVT) mindestens ein integrierter Kanal (CHN) zur Führung eines Stroms einer Betriebsflüssigkeit des Getriebes (TRM) vorgesehen ist.

12. Gehäuse (CSG) nach mindestens einem der vorhergehenden Ansprüche, wobei das Gehäuse (CSG) eine Teilfuge (PTP) aufweist, die das Gehäuse (CSG) in ein erstes Teilgehäuse (PCS) und ein zweites Teilgehäuse (PCS) aufteilt, wobei die Teilgehäuse (PCS) in der Teilfuge (PTP) lösbar aneinander befestigbar ausgebildet sind.

13. Gehäuse (CSG) nach mindestens dem vorhergehenden Anspruch, wobei das erste Teilgehäuse (PCS) als ein massives Schweißbauteil oder massives Gussbauteil ausgebildet ist und das zweite Teilgehäuse (PCS) als das Blechbauteil (SME) ausgebildet ist.

14. Gehäuse (CSG) nach mindestens einem der vorhergehenden Ansprüche, wobei das erste Teilgehäuse (PCS) in einer Betriebsaufstellung ein Gehäuseunterteil (LPT) ist und das zweite Teilgehäuse (PCS) ein Gehäuseoberteil (UPT) ist.

15. Gehäuse (CSG) nach mindestens einem der vorhergehenden Ansprüche, wobei zumindest einige Bleche (SML) mittels mindestens einer Auftragsschweißung (ADW) verstärkt sind.

16. Gehäuse (CSG) nach mindestens einem der vorhergehenden Ansprüche, wobei zumindest eine Gehäusewand (CSW) mindestens eine Versteifungsrippe (SRP) aufweist.

17. Gehäuse (CSG) nach mindestens einem der vorhergehenden Ansprüche, wobei in dem Gehäuse (CSG) die Anordnung von mehreren Rädern (WHL), die miteinander in Wirkverbindung stehen, vorgesehen ist, wobei die Räder (WHL) mit drehbaren Wellen (SHF) gekoppelt sind, die in Lagerstellen (BRP) lagern.

18. Gehäuse (CSG) nach mindestens dem vorhergehenden Anspruch 17, wobei mindestens eine Welle (SHF) einen Nenndurchmesser von mindestens 95mm aufweist.

19. Gehäuse (CSG) nach mindestens einem der vorhergehenden Ansprüche, wobei die Lagerstellen (BRP) mit Lagerelementen (BRE) belegbar sind, wobei das Lagerelement (BRE) Anschlusselemente (CNE) zur Befestigung an dem Gehäuse (CSG) und mindestens ein Lager (BRG) zur Aufnahme einer Welle (SHF) eines Rades (WHL) aufweist.

20. Gehäuse (CSG) nach mindestens einem der vorhergehenden Ansprüche, wobei zumindest eine Gehäusewand (CSW) mindestens abschnittsweise mindestens vier sich flächig und im Wesentlichen parallel zueinander erstreckende Bleche (SML) aufweist, wobei mindestens ein Blechabschnitt von jedem Blech (SML) entlang der im Wesentlichen parallelen Erstreckung zueinander zumindest bereichsweise mit einem Blechabschnitt von einem anderen der sich im Wesentlichen parallel zueinander erstreckenden Bleche (SML) verbunden ist, derart, dass alle der mindestens vier parallelen Bleche (SML) zu einem Blechmehrschichtbereiche (SMM) miteinander verbunden sind.

21. Verfahren zur Erzeugung eines Gehäuses (CSG) nach mindestens einem der vorhergehenden Ansprüche, umfassend:
- Ermittlung einer Geometrie eines umbauten Raumes mit Anschlussgeometrien des Gehäuses (CSG),
- Ermittlung einer Auslegungsbelastung (OPL) des Gehäuses (CSG),
- Festlegen von Geometrien von Hohlräumen (CVT) in den Gehäusewänden (CSW),
- Festlegen von unterschiedlichen Blechklassen (SCL) mit jeweils einer individuellen Blechstärke von bis zu 10mm,
- Festlegen der
• Lagenanzahl (LYN) der Bleche (SML),
• Blechklasse (SCL) jeder einzelnen Lage (LYR),
• Art der Verbindung (SMC) und der Verbindungsbereiche zwischen den Blechen (SML),
• Anordnung von Biegekanten (BED) und Anschlusskanten (CED) von Gehäusewänden (CSW),
für die Kombination aus:
• der Geometrie des umbauten Raumes mit Anschlussgeometrien,
• die Auslegungsbelastung (OPL),
• die Geometrien der Hohlräume (CVT),
- Ausschneiden der Bleche (SML),
- Biegen der Bleche (SML),
- Mindestens bereichsweises Verbinden von zwei sich flächig und im Wesentlichen parallel zueinander erstreckender Bleche (SML) zu Blechmehrschichtbereichen (SMM) und Verbinden von aneinander anstoßender Gehäusewänden (CSW),
wobei mindestens zwei Blechabschnitte entlang der im Wesentlichen parallelen Erstreckung zueinander zumindest bereichsweise miteinander verbunden sind zu Blechmehrschichtbereichen (SMM) zu zumindest einem Teilgehäuse (PCS) oder Gehäuse (CSG),
Wiederholung vorangegangener Schritte bis zur Erstellung aller Elemente des Gehäuses (CSG), die Blechmehrschichtbereiche (SMM) aufweisen.

22. Computerimplementiertes Verfahren zur Simulation (SIM) einer Anordnung (ARG) oder eines Verfahrens nach mindestens einem der vorhergehenden Ansprüche.

23. Computerprogrammprodukt (CPP) zur Durchführung eines Verfahrens nach Anspruch 22 mittels mindestens eines Computers (CMP).
